# EUROPÄISCHE PATENTANMELDUNG

(11) **EP 3 970 888 A2**
(43) Veröffentlichungstag der Anmeldung: **23.03.2022**
(21) Anmeldenummer: 21193215.7
(22) Anmeldetag: 26.08.2021
(51) Int. Cl.: B23B 27/14, B28D 1/16

(54) **SCHNEIDELEMENT, DREHWERKZEUG UND DREHMASCHINE HIERMIT SOWIE VERFAHREN UND VERWENDUNG**

(30) Priorität: 31.08.2020 DE 102020122725
(71) Anmelder: OptoTech Optikmaschinen GmbH, 07749 Jena (DE)
(72) Erfinder: MANDLER, Roland, 35452 Heuchelheim (DE)
(74) Vertreter: Patentanwälte Olbricht Buchhold Keulertz

(57) **Zusammenfassung**

Schneidelement (1) für eine Drehmaschine (30) der Zerspantechnik, mit einer Werkzeugschneide (2), die aus einem ersten Material besteht, eine Werkzeugachse (A) des Schneidelements (1) in senkrechtem Winkel schneidet, einen Werkzeugradius (R) bezogen auf einen Kreismittelpunkt (M) aufweist, der zwischen 3,0 mm und 7,0 mm beträgt, wobei der Kreismittelpunkt (M) auf der Werkzeugachse (A) liegt, wobei die Werkzeugschneide (2) einen Öffnungswinkel (W) bezogen auf den Kreismittelpunkt (M) aufweist, der maximal 90 Grad beträgt, und wobei das Schneidelement (1) eine Asymmetrie derart aufweist, dass die Werkzeugachse (A) den Öffnungswinkel (W) außermittig schneidet.

Drehwerkzeug hiermit.
Verfahren zu dem Betrieb des Schneidelements und des Drehwerkzeugs.
Verwendung in einem Drehprozess.

## Beschreibung

Die Erfindung betrifft ein Schneidelement gemäß dem Oberbegriff von Anspruch 1, ein Drehwerkzeug hiermit nach Anspruch 8, eine Drehmaschine mit einem der beiden nach Anspruch 11, Verfahren nach den Ansprüchen 12 und 13 sowie eine Verwendung nach Anspruch 15, jeweils unter Einsatz des Schneidelements nach Anspruch 1.

Zur Durchführung von Zerspanungsverfahren mit geometrisch bestimmten Schneiden sind Drehverfahren mit Drehmaschinen bekannt. Durch Rotation eines Werkstücks um eine Rotationsachse, wird dessen Oberfläche an einer Werkzeugschneide eines Schneidelements vorbeigeführt und der Span abgehoben. Die weiteren Bewegungen zur Erzeugung des Schnitts, sind meist deutlich langsamer und kürzer und werden meist durch Freiheitsgrade des Drehwerkzeugs umgesetzt.

Eine Form des Drehens ist das Quer-Plandrehen. Beim Quer-Plandrehen bewegt sich die Werkzeugschneide quer zur Drehachse. Es wird in der Praxis auch kurz als Plandrehen bezeichnet. Es resultiert im Drehergebnis eine plane Stirnfläche am Werkstück. Eine verwandte Sonderform des Quer-Plandrehens kommt bei der Herstellung optischer Linsenflächen zum Einsatz. Derartiges wird beispielsweise in DE 10 2011 053 772 B3 beschrieben. Hier wird eine Stirnseite eines Linsenrohlings von außen nach innen zur Rotationsachse mit der Werkzeugschneide abgefahren. Es resultiert durch die Rotation des Werkstücks ein spiralförmiger Arbeitspfad, den die Werkzeugschneide auf dem Werkstück zurücklegt. Die Querbewegung der Werkzeugschneide wird zusätzlich durch eine Längsbewegung parallel zur Rotationsachse überlagert. Im einfachsten Fall dient dies der Herstellung einer sphärischen konvexen oder konkaven Oberfläche. Es lassen sich auf gleiche Art aber auch asphärische rotationssymmetrische Flächen erzeugen. Höhere Anforderungen an die Längsbewegung der Werkzeugschneide bestehen, wenn Freiformflächen mit Erhebungen und Senken auf dem Oberflächenumfang erzeugt werden oder aber ein prismatisches Gefälle auf der Oberfläche zu erzeugen ist. Die Längsbewegung ist dann an den Drehwinkel des Linsenrohlings gekoppelt und muss bei jeder Umdrehung vor- und zurück erfolgen. Dies gelingt beispielsweise mit schnellen Servomotoren wie Fast-Tools, Tauchspulen und Piezo-Aktuatoren. Als Drehwerkzeuge kommen insbesondere Schneidplatten bzw. Wendeschneidplatten zum Einsatz, wie sie beispielsweise in AT 305 726 B oder EP 2 813 305 B1 angegeben sind.

Nachteilhaft an den vorbekannten Lösungen ist die langsame Herstellgeschwindigkeit beim Durchführen des Drehverfahrens bedingt durch Werkzeugradien von circa 2 mm und der damit verbunden hohen Anzahl an Umdrehungen zum Überfahren der gesamten Fläche. Die Rotationsgeschwindigkeit lässt sich nämlich nicht nach Belieben erhöhen. Entsprechend ist die Fertigungsstückzahl der Drehmaschine gering. Vor allem bei der Brillenglasfertigung mit hohen Fertigungsvolumen resultiert ein Brillenglaspreis, den es aus betriebswirtschaftlichen Gründen zu reduzieren gilt.

Mit einer kreisrunden Schneidplatte mit einem Durchmesser von 8 mm, wie sie beispielsweise von WO 02/076660 A1 angegeben ist, lassen sich Prismenwinkel und Gradienten auf einer zu drehenden Oberfläche nur sehr beschränkt erzeugen, weil das Werkzeug schlichtweg zu groß ist, um derartige Strukturen herzustellen. Damit ist es ungeeignet für die Drehbearbeitung von Brillengläsern.

Aufgabe der Erfindung ist es daher, eine technische Lösung bereitzustellen, mit der die Geschwindigkeit der drehenden Bearbeitung von Linsenrohlingen verbessert wird. Die Lösung soll zuverlässig funktionieren, eine hohe Fertigungspräzision haben und preiswert umsetzbar sein. Nach Möglichkeit sollen auch Kunden von Bestandsmaschinen von der Lösung profitieren.

Hauptmerkmale der Erfindung sind im kennzeichnenden Teil von Anspruch 1, sowie den Ansprüchen 8, 11, 12, 13 und 15 angegeben. Ausgestaltungen sind Gegenstand der Ansprüche 2 bis 7, 9 bis 10 und 14 sowie der Beschreibung.

Die Erfindung betrifft ein Schneidelement für eine Drehmaschine der Zerspantechnik, mit einer Werkzeugschneide, die aus einem ersten Material besteht, die eine (geometrische) Werkzeugachse des Schneidelements in senkrechtem Winkel (geometrisch) schneidet, ausgerichtet ist, einen Werkzeugradius bezogen auf einen Kreismittelpunkt aufweist, wobei der Kreismittelpunkt auf der Werkzeugachse liegt, und einen Öffnungswinkel bezogen auf den Kreismittelpunkt aufweist. Dabei ist vorgesehen, dass der Werkzeugradius zwischen 3,0 mm und 7,0 mm, vorzugsweise zwischen 4,0 mm und 6,0 mm, und besonders bevorzugt zwischen 4,5 mm und 5,5 mm beträgt, dass die Werkzeugschneide einen Öffnungswinkel bezogen auf den Kreismittelpunkt aufweist, der maximal 90 Grad, bevorzugt maximal 70 Grad, weiter bevorzugt maximal 60 Grad, und besonders bevorzugt maximal 55 Grad beträgt, und dass das Schneidelement eine Asymmetrie derart aufweist, dass die Werkzeugachse den Öffnungswinkel außermittig (geometrisch) schneidet.

Vorteilhaft hieran ist, dass die Produktivität, durch eine Vergrößerung des Radius des Drehwerkzeuges gegenüber den im Stand der Technik zur Brillenglasherstellung genutzten Radien von bis 2.0 mm, gesteigert werden kann. Dies gelingt insbesondere durch die Verringerung der notwendigen Umdrehungen, um die Oberfläche zu bearbeiten. Dabei wird mittels dem Werkzeugradius von über 3,0 mm die Spiralgangbreite erhöht, ohne die gedrehte Oberflächenstruktur {Spitzenhöhe) stark zu verändern, um die späteren Gläser mit den Standardparametern polieren zu können. Dabei werden zerstörende Kontakte der Werkzeugschneide mit Oberflächenbereichen, die bei der Brillenglasherstellung nicht abgetragen werden sollen, durch die Asymmetrie vermieden, obwohl der vergleichsweise große Radius der Werkzeugschneide genutzt wird. So steigt bei einem exemplarischen Vergleich einer symmetrischen Werkzeugschneide mit 2 mm Radius und einer asymmetrischen Werkzeugschneide mit 5 mm Radius die Spiralgangbreite bei der Bearbeitung eines Linsenrohlings von 0,033 mm auf 0,053 mm, die Anzahl der Umdrehungen für einen typischen Durchmesser des Linsenrohlings von 65 mm sinkt von circa 2.000 auf 1.250 Umdrehungen, wobei jeweils eine gefertigte Spitzenhöhe zwischen den Spiralgängen auf 0,07 µm begrenzt ist. Dieser 5 mm erscheint in der Brillenglasfertigung als idealer Werkzeugradius, mit dem noch eine Vielzahl an Gläsern zügig. bearbeitet werden können. Die Spitzenhöhen lassen sich auch bei Einsatz des erfindungsgemäßen Schneidelements mit zumindest nahezu gleichem Aufwand polieren. Die Prozesszeit des Drehens sinkt entsprechend der notwendigen Umdrehungen bei gleicher Rotationsgeschwindigkeit um circa 37,5 %. Das erfindungsgemäße Schneidelement lässt sich auch ohne mechanischen oder steuerungstechnischen Umbau in vielen Bestandsmaschinen nutzen, sodass eine kundenfreundliche Nachrüstbarkeit der Lösung bereitsteht.

In einer Ausgestaltungsvariante ist das erste Material ein synthetischer Diamantwerkstoff, insbesondere aus der Gruppe Polykristalliner Diamant (PKD), Chemical Vapor Deposition (CVD), synthetischer monokristalliner Diamant (MKD) und aggregierte Diamant-Nanostäbchen (ADNR), oder polykristallines kubisches Bornitrid (CBN), oder ein Naturdiamant (ND). Diese harten Werkstoffe eignen sich besonders gut für die Bearbeitung von Glas und hochfesten Kunststoffen, wie sie bei der Brillenglasfertigung zu bearbeiten sind.

Optional ist die Asymmetrie derart ausgebildet, dass auf einer ersten Seite der Werkzeugachse ein längerer Abschnitt der Werkzeugschneide angeordnet ist als auf der gegenüberliegenden zweiten Seite der Werkzeugachse. Hierdurch werden in Abhängigkeit der Vorschubbewegung der Werkzeugschneide unterschiedliche Bearbeitungen ermöglicht. Dies ist insbesondere bei gekrümmten Bearbeitungsflächen hilfreich, um Kollisionen des Schneidelements abseits des Spiralgangs zu vermeiden und so ungewollt Material abzutragen. Außerdem ist das Schneidelement preiswerter, als wenn es sich auf beiden Seiten gleich weit von der Werkzeugachse wegerstrecken würde. Bei der Bearbeitung von schrägen Flächen wird der ins Tal weisende Abschnitt des Schneidelements weit weniger oder gar nicht gebraucht als der zum Berg weisende Abschnitt und kann deshalb entfallen.

Weiterhin ist eine Ausgestaltung zu bevorzugen, gemäß der die Asymmetrie derart ausgebildet ist, dass mit dem Bereich der Werkzeugschneide, die quer zur Werkzeugachse ausgerichtet ist, eher gerade Planflächen bearbeitet werden können, und sich der Mittelpfad des Spiralgangs bei zunehmendem Prismenwinkel auf der Bearbeitungsfläche in Richtung des schrägeren Bereichs verschiebt.

In einer speziellen Ausführungsform ist die Asymmetrie derart ausgebildet, dass das Schneidelement auf einer ersten Seite der Werkzeugachse spitzer zuläuft als auf der gegenüberliegenden zweiten Seite der Werkzeugachse. Hierdurch lässt sich die Menge des vergleichsweise teuren ersten Materials reduzieren, indem in typischerweise weniger beanspruchten Bereich des Schneidelements auch weniger Material hinter der Werkzeugschneide angeordnet ist.

Weiterhin kann die Asymmetrie derart ausgebildet sein, dass sich das Schneidelement, im Besonderen die Werkzeugschneide, auf einer ersten Seite der Werkzeugachse weiter von der Werkzeugachse weg erstreckt als auf der gegenüberliegenden zweiten Seite der Werkzeugachse, vorzugsweise auf der ersten Seite wenigstens doppelt so weit wegerstreckt wie auf der zweiten Seite, weiter bevorzugt auf der ersten Seite wenigstens zweieinhalbmal so weit wegerstreckt wie auf der zweiten Seite, und besonders bevorzugt auf der ersten Seite wenigstens dreimal so weit wegerstreckt wie auf der zweiten Seite. Maximal sollte sich das Schneidelement auf der ersten Seite der Werkzeugachse um das Fünffache von der Werkzeugachse wegerstrecken als auf der gegenüberliegenden zweiten Seite der Werkzeugachse.

Optional kann sich an den Enden der Werkzeugschneide jeweils eine Seitenfläche anschließen, die innerhalb des Werkzeugradius R angeordnet ist. Die Seitenflächen bilden also den seitlichen Abschluss der Werkzeugschneide und begrenzen gewissermaßen eine Trägermatrix der Werkzeugschneide. Dabei können die Seitenflächen exakt oder zumindest im Wesentlichen parallel zueinander und/oder der Werkzeugachse ausgerichtet sein oder beginnend an den zwei Enden der Werkzeugschneide aufeinander zulaufen.

Hinsichtlich der Größenverhältnisse bietet sich eine Ausgestaltung an, wonach die Breite des Schneidelements quer zur Werkzeugachse größer ist als die Tiefe entlang der Werkzeugachse. Hierdurch lässt sich die Menge des vergleichsweise teuren ersten Materials reduzieren. Dabei sollte die Breite des Schneidelements quer zur Werkzeugachse zwischen 3,0 mm und 6,0 mm, bevorzugt zwischen 3,5 mm und 5,0 mm und besonders bevorzugt zwischen 3,5 mm und 4,5 mm betragen.

Schließlich sollte das Schneidelement eine Hinterkante aufweisen, die exakt oder zumindest im Wesentlichen quer zur Werkzeugachse ausgerichtet ist.

Im Speziellen kann das Schneidelement die Grundform eines Plättchens aufweisen, dessen Plättchendicke geringer ist als die Breite quer zur Werkzeugachse und geringer ist als die Tiefe entlang der Werkzeugachse.

Für eine effiziente Bearbeitung von Glas bietet sich eine Auslegung an, wonach die Werkzeugschneide positiv mit einem Freiwinkel größer 0° ausgebildet ist, wobei der Freiwinkel vorzugsweise zwischen 10° und 25°, weiter bevorzugt zwischen 14° und 21°, und besonders bevorzugt zwischen 17° und 19° beträgt.

Die Erfindung betrifft außerdem ein Drehwerkzeug mit einem Schneidelement wie es vor- und nachstehend beschrieben ist, das an einem Trägerelement aus einem zweiten Material festgelegt ist, wobei das erste Material eine höhere Härte aufweist als das zweite Material, wobei das Trägerelement eine Trägerachse aufweist, die parallel und/oder koaxial zur Werkzeugachse ausgerichtet ist.

Damit gelingt eine materialtechnische Funktionstrennung zwischen den Aufgaben Positionieren und stützen der Werkzeugschneide und dem Schneiden durch die Werkzeugscheide. Mithin kann ein teures erstes Material und ein im Vergleich günstigeres zweites Material eingesetzt werden, wodurch die Drehwerkzeugkosten gering sind. Außerdem kann die Werkzeugschneide aufgrund der hohen Härte vorrangig auf das Schneiden ausgelegt werden, wohingegen das Trägerelement zäher und weniger spröde ist, um beispielsweise bei einem Einklemmen oder Festschrauben an einem Drehmeißel nicht zu brechen. Des Weiteren lassen sich die Wärmeableitung und geringfügige Dämpfungen mit dem Trägerelement aus weniger hartem Material erzielen. Die Materialeigenschaft Härte soll vorliegend gemäß der Härteskala nach Mohs verstanden werden.

Bei dem zweiten Material handelt es sich vorzugsweise um einen Werkstoff aus der Gruppe Wolfram oder Wolframlegierung, Werkzeugstahl, Bornitrit und Keramik. Wolframwerkstoffe eignen sich besonders gut zur Ausbildung hochfester dauerhafter Verbindungen mit Diamantwerkstoffen. Werkzeugstahl ist vergleichsweise preiswert. Bornitrit hat eine hohe Härte, wodurch das Schneidelement besonders präzise und ungedämpft gelagert ist. Keramiken sind ebenfalls sehr hart und meist preiswerter als Wolfram und Bornitrit.

Gemäß einer speziellen Ausführung ist die Befestigung des Schneidelements am Trägerelement kraftschlüssig, formschlüssig und/oder stoffschlüssig ausgebildet. Kraftschlüssige Verbindungen sind sehr stabil, können jedoch Verformungen verursachen und in Abhängigkeit von der Härte des ersten Materials teilweise problematisch sein, weil das Schneidelement aufgrund der Sprödigkeit brechen kann. Bei derartigen Problemen wird die kraftschlüssige Verbindung daher bevorzugt in Ergänzung zu Formschluss und/oder Stoffschluss eingesetzt. Ein Formschluss ermöglicht eine hochpräzise Befestigung und einfache Positionierung bei der Herstellung. In den meisten Anwendungsfällen reicht der Formschluss jedoch in Alleinstellung nicht für die Befestigung, weswegen er vorzugsweise durch einen Kraftschluss oder einen Stoffschluss ergänzt wird. Ein Stoffschluss ermöglicht eine stabile dauerhafte Verbindung mit guter Wärmedurchleitung bereits in Alleinstellung. Dennoch kann er optional durch einen Formschluss oder einen Kraftschluss ergänzt werden. Hierdurch lässt sich die Stabilität und Dauerfestigkeit erhöhen und ggf. auch eine Verliersicherung für das ggf. sehr teure erste Material ausbilden.

Im Besonderen kann das Trägerelement eine rautenförmige Grundform mit zwei stumpfen und zwei spitzen Ecken aufweisen, wobei das Schneidelement an oder auf einer der spitzen Ecken angeordnet ist. Hierdurch lässt sich das Drehwerkzeug in der Flucht hinter der Werkzeugschneide in einer Drehmaschine festlegen, sodass die Umgebung um die Werkzeugschneide möglichst frei von physischen Bauteilen ist, die mit dem Werkstück kollidieren könnten. Außerdem ist die Rautenform gängige Negativform von Drehmeißeln zur Aufnahme von herkömmlichen Schneidplatten, sodass sich das erfindungsgemäße Drehwerkzeug in Bestandsmeißel und damit auch Bestandsdrehmaschinen einsetzen lässt. Entsprechend bietet sich eine Auslegung derart an, dass das Trägerelement die Grundform einer Wendeschneidplatte aufweist.

In der Variante des Drehwerkzeugs, bei der die Trägerachse und die Werkzeugachse parallel zueinander ausgerichtet sind, kann optional ein Seitenversatz zwischen Trägerachse und der Werkzeugachse bestehen, der zwischen 0,40 cm und 1,10 cm, bevorzugt zwischen 0,55 cm und 0,90 cm und besonders bevorzugt zwischen 0,60 cm und 0,80 cm beträgt. Durch den Seitenversatz verschiebt sich die Werkzeugschneide vor dem Trägerelement, wobei dies bevorzugt in der Richtung erfolgt, die bewirkt, dass die Werkzeugschneide die Trägerachse (geometrisch) weniger schräg schneidet. Entsprechend liegt dann die Mittelachse des Spiralgangs bei einer Bearbeitung von gekrümmten Stirnflächen zentraler vor der Trägerachse. Ein geringfügiger Versatz kann aber durchaus gewünscht sein, denn die Mittellinie des Spiralgangs verlagert sich aufgrund der prismatischen Schräge der Bearbeitungsfläche gegenüber einer reinen Planfläche.

Vorzugsweise weist das Trägerelement ein Befestigungsloch zur Festlegung auf einem Drehmeißel auf. Damit lässt sich eine schnelle Montage und ein schneller Austausch des Drehwerkzeugs, beispielsweise mittels einer Befestigungsschraube, erzielen. Das Drehwerkzeug kann auch einen Drehmeißel aufweisen. An diesem ist das Trägerelement mechanisch lösbar festgelegt, beispielsweise mittels einer Befestigungsschraube. Der Drehmeißel ist also ein vom Trägerelement separates Bauteil. Er hat vorzugsweise einen Montageschaft, zur Festlegung in einer Werkzeugaufnahme einer Drehmaschine. Dabei besteht der Drehmeißel bevorzugt aus Werkzeugstahl.

Des Weiteren betrifft die Erfindung eine Drehmaschine mit einem Schneidelement, wie es vor- und nachstehend beschrieben ist, oder einem Drehwerkzeug, wie es vor- und nachstehend beschrieben ist, und mit einer Werkstückspindel zur Aufnahme und Rotation eines Werkstücks um eine Rotationsachse, wobei die Rotationsachse und die Werkzeugachse zur Bearbeitung einer Stirnfläche des Werkstücks exakt oder zumindest im Wesentlichen parallel zueinander ausgerichtet sind, und wobei das Schneidelement und die Werkstückspindel relativ zueinander in zwei oder drei Maschinenachsrichtungen bewegbar mit einem Stellantrieb angetrieben sind.

Mit dieser Drehmaschine lassen sich nunmehr aufgrund der asymmetrischen Werkzeugschneide mit großem Radius gekrümmte Stirnflächen besonders schnell herstellen.

Im Besonderen lässt sich beispielsweise die Stirnseite eines Linsenrohlings von außen nach innen zur Rotationsachse mit der Werkzeugschneide abfahren. Es resultiert durch die Rotation des Werkstücks ein spiralförmiger Arbeitspfad, den die Werkzeugschneide auf dem Werkstück zurücklegt. Die Querbewegung der Werkzeugschneide wird zusätzlich durch eine Längsbewegung parallel oder zumindest im Wesentlichen gleichgerichtet zur Rotationsachse überlagert. Vorzugsweise weist der Stellantrieb einen Servomotor wie ein Fast-Tool, eine Tauchspule oder einen Piezo-Aktuator auf. Außerdem bietet es sich an einen Stellantrieb mit einem Kreuztisch einzusetzen, um die Maschinenachsen auszubilden. Vorzugsweise ist eine der Maschinenachsrichtungen zumindest im Wesentlichen oder exakt parallel zur Trägerachse ausgerichtet.

Fernerhin betrifft die Erfindung ein Verfahren zum Betrieb einer Drehmaschine mit einem ersten Drehwerkzeug wie es vor- und nachstehend beschrieben ist und einem zweiten Drehwerkzeug, dessen Werkzeugradius kleiner ist als der Werkzeugradius des ersten Drehwerkzeugs, wobei mittels einer Entscheidungslogik entschieden wird, ob die Bearbeitung einer vordefinierten Bearbeitungsfläche eines Werkstücks mit dem ersten Drehwerkzeug oder dem zweiten Drehwerkzeug durchgeführt wird, wobei die Entscheidungslogik eine maximal herzustellende Flächenkrümmung bestimmt und mit einem definierten Grenzwert abgleicht und/oder einen maximal herzustellenden Prismenwinkel bestimmt und mit einem definierten Grenzwert abgleicht, und wobei bei Übersteigen eines der Grenzwerte anstatt des ersten Drehwerkzeugs das zweite Drehwerkzeug für die Bearbeitung eingesetzt wird.

Mit dem Verfahren wird zum Beispiel bei der Brillenglasfertigung mit ständig wechselnden Oberflächengeometrien und Linsenrohlingskrümmungen sichergestellt, dass wann immer möglich, das aufgrund des größeren Werkzeugradius schneller arbeitende erste Drehwerkzeug eingesetzt wird. Wann immer jedoch, aufgrund eines zu steilen Prismenwinkels oder zu engem Radius der breite Werkzeugradius die Zieloberfläche nicht herstellen kann, wird auf das zweite Drehwerkzeug mit kleinerem Werkzeugradius zurückgegriffen. Plakativ ausgedrückt könnte man sagen, dass man das Drehwerkzeug mit kleinerem Werkzeugradius hernimmt, um besser in die Ecken zu kommen, wenn solche Ecken vorhanden sind.

Das Verfahren erfolgt optional so, dass die Entscheidungslogik automatisiert mit einer Steuereinheit erfolgt und das erste oder zweite Drehwerkzeug automatisiert angesteuert und eingesetzt wird. Damit ist ein vollautomatisierter Verfahrensablauf in den meist ohnehin automatisierten CNC-Fertigungsablauf bspw. einer Brillenglasfertigung ermöglicht.

Bei einem weiteren erfindungsgemäßen Verfahren zum Betrieb einer Drehmaschine mit einem ersten Drehwerkzeug wie es vor- und nachstehend beschrieben ist, ist vorgesehen, dass am Werkstück eine konkave Stirnseite durch Zerspanung hergestellt wird, indem das Werkstück rotierend um eine Rotationsachse angetrieben ist und das Drehwerkzeug von außen nach innen auf die Rotationsachse zu bewegt wird, wobei die Rotationsachse und die Werkzeugachse zur Bearbeitung der Stirnfläche exakt oder zumindest im Wesentlichen parallel zueinander ausgerichtet sind, und wobei das Drehwerkzeug so ausgerichtet ist, dass der Kreismittelpunkt zwischen der Werkzeugachse und der Rotationsachse liegt.

Entsprechend ist basierend auf der einseitig abzufahrenden Hälfte des konkaven Werkstücks eine passende Ausrichtung der asymmetrischen Werkzeugschneide realisiert.

Grundsätzlich kann dabei eine Linsenachse des Werkstücks koaxial zur Rotationsachse ausgerichtet sein. Alternativ ist jedoch auch möglich, dass das Werkstück prismatisch an einem Werkstückhalter gehalten ist, vorzugsweise aufgeblockt ist, sodass eine Linsenachse des Werkstücks einen Winkel größer als 0°, vorzugsweise zwischen 0,20° und 2,00°, weiter bevorzugt zwischen 0,50° und 1,80° und besonders bevorzugt zwischen 0,80° und 1,50° zur Rotationsachse aufweist. Durch diesen Winkel können ungewollte Kollisionen des Werkstücks mit der Werkzeugschneide vermieden werden, sodass zusätzlich zu den ohnehin mit dem ersten Drehwerkzeug bearbeitbaren Flächen weitere Flächengeometrien schnell herstellbar sind. Damit reduziert sich beispielsweise die Anzahl der Linsenrohlinge, die mit einem Drehwerkzeug mit kleinerem Werkzeugradius bearbeitet werden müssen.

Fernerhin betrifft die Erfindung eine Verwendung eines Schneidelements, wie es vor- und nachstehend beschrieben ist, oder eines Drehwerkzeugs, wie es vor- und nachstehend beschrieben ist, bei der Herstellung gekrümmter Oberflächen durch Zerspanung in einem Drehprozess. Auch bei dieser Verwendung wird eine hohe Effizienz durch die asymmetrische Werkzeugschneide mit großem Radius erzielt.

Von besonderem Vorteil sind die Verfahren und die Verwendung, wenn das Werkstück ein Linsenrohling aus einem transparenten oder transluzenten Werkstoff ist.

Von besonderem Vorteil sind die Verfahren und die Verwendung auch, wenn das Werkstück zu einer optischen Linse, insbesondere einem Brillenglas, und ganz besonders zu einem Rezeptglas mit einer asphärischen Fläche oder einer Freiformfläche bearbeitet wird.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Draufsicht auf ein Drehwerkzeug mit Schneidelement;
- Fig. 2: eine Seitenansicht des Drehwerkzeugs nach Fig. 1 aufweisend einen zusätzlichen Drehmeißel; und
- Fig. 3: eine Schemaskizze einer Drehmaschine mit dem Drehwerkzeug nach Fig. 1 sowie einem Werkstück.

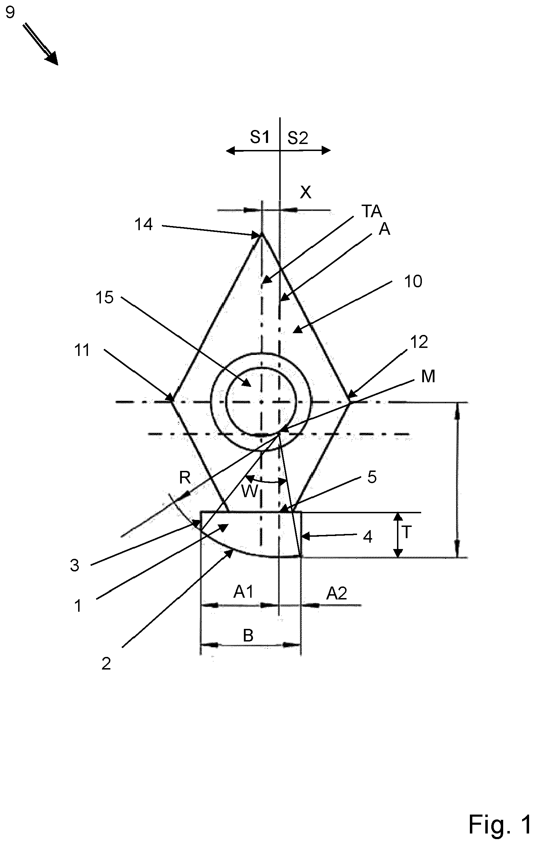

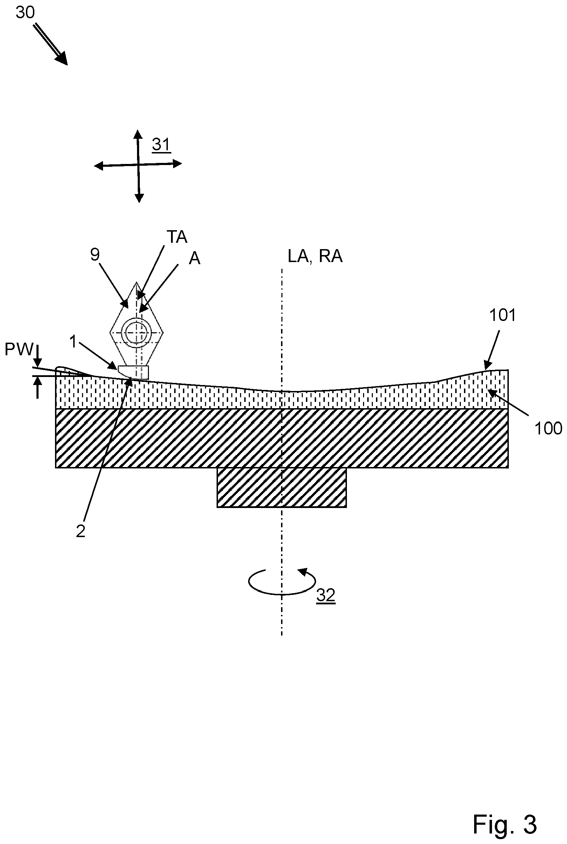

**Fig. 1** zeigt eine schematische Draufsicht auf ein Drehwerkzeug 9 mit einem Schneidelement 1 für eine Drehmaschine (siehe Fig. 3, Bezugsziffer 30) der Zerspantechnik, das auf einem Trägerelement 10 angeordnet ist. Das Schneidelement 1 weist eine Werkzeugschneide 2 mit einem Werkzeugradius R auf, der vorliegend zwischen 4,5 mm und 5,5 mm beträgt. Es besteht aus einem ersten Material, bei dem es sich um einen synthetischen Diamantwerkstoff aus der Gruppe Polykristalliner Diamant (PKD), Chemical Vapor Deposition (CVD), synthetischer monokristalliner Diamant (MKD) und Aggregierte Diamant-Nanostäbchen (ADNR), oder polykristallines kubisches Bornitrid (CBN), oder einen Naturdiamanten (ND) handelt.

Ein Kreismittelpunkt M bildet des Ausgangspunkt des Werkzeugradius R. Der Kreismittelpunkt M liegt auf einer Werkzeugachse A, die die Werkzeugschneide 2 in senkrechtem Winkel schneidet. Die Werkzeugschneide 2 weist einen Öffnungswinkel W auf, der am Kreismittelpunkt M zu bestimmen ist, und der vorliegend weniger als 55 beträgt. Mit anderen Worten ist die Werkzeugschneide durch einen Kreisbahnausschnitt definiert, der hier kleiner als 55° ist. Wie man erkennt, ist das Schneidelement asymmetrisch ausgestaltet. Dieser Asymmetrie wohnen folgende Eigenschaften inne:
- Die Werkzeugachse A schneidet den Öffnungswinkel W außermittig;
- Auf einer ersten Seite S1 der Werkzeugachse A ist ein längerer Abschnitt A1 der Werkzeugschneide 2 angeordnet als auf der gegenüberliegenden zweiten Seite S2 der Werkzeugachse A;
- Das Schneidelement 1 läuft auf der ersten Seite S1 der Werkzeugachse A spitzer zu als auf der zweiten Seite S2;
- Das Schneidelement 1 erstreckt sich auf der ersten Seite S1 weiter von der Werkzeugachse A weg als auf der zweiten Seite S2, hier insbesondere um mehr als dreimal so weit.

An den Enden der Werkzeugschneide 2 schließt sich jeweils eine Seitenfläche 3, 4 an die Werkzeugschneide 2 an, die innerhalb des Werkzeugradius R angeordnet ist. Die Seitenflächen 3, 4 sind exakt parallel zueinander und auch zu der Werkzeugachse A ausgerichtet. Der Werkzeugschneide 2 gegenüberliegend bildet eine gerade Hinterkante 5 einen Abschluss des Schneidelements 1. Die Hinterkante 5 ist exakt quer, also senkrecht zur Werkzeugachse A ausgerichtet.

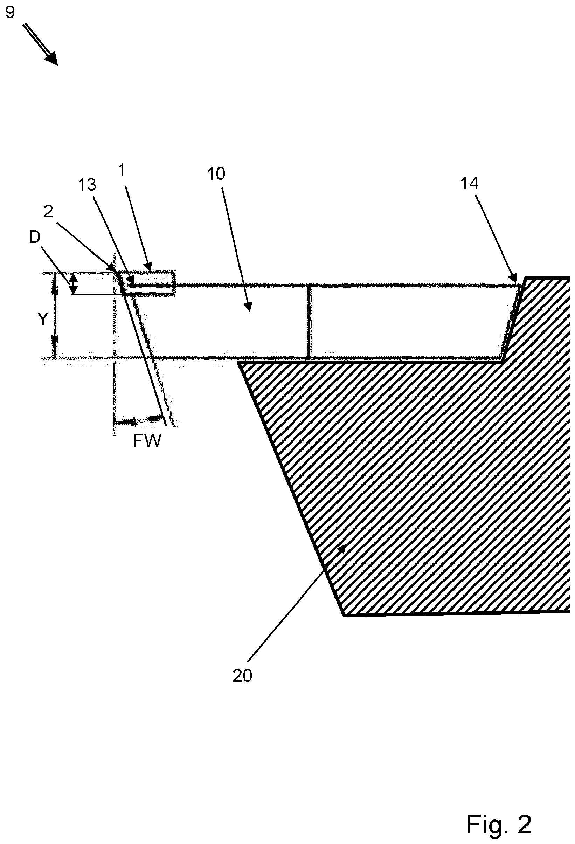

Hinsichtlich der relativen Dimensionen wird deutlich, dass die Breite B des Schneidelements 1 quer zur Werkzeugachse A größer ist als die Tiefe T entlang der Werkzeugachse A und wie man vor allem in Fig. 2 erkennen kann, die Dicke D des Schneidelements 1 geringer ist als die Tiefe T entlang der Werkzeugachse A. In absoluten Werten kann die Breite B quer zur Werkzeugachse A beispielsweise zwischen 3,5 mm und 4,5 mm betragen.

Wie man vor allem in Fig. 2 erkennen kann, ist die Werkzeugschneide 2 positiv mit einem Freiwinkel FW größer 0° ausgebildet, der beispielhaft zwischen 17° und 19° beträgt. Das Trägerelement 10 liegt zurückversetzt hinter dem Freiwinkel FW. In diesem Ausführungsbeispiel verläuft das vordere Ende des Trägerelements 10 parallel zurückversetzt zum Freiwinkel FW. Die gesamte Drehwerkzeugdicke Y kann beispielsweise zwischen 2 mm und 4 mm liegen.

Das Trägerelement 10 besteht aus einem zweiten Material, das eine geringere Härte aufweist als das erste Material (gemäß Härteskala nach Mohs). Das zweite Material kann ein Werkstoff aus der Gruppe Wolfram oder Wolframlegierung, Werkzeugstahl, Bornitrit und Keramik sein.

Das Trägerelement 10 hat eine Trägerachse TA, die parallel um einen Seitenversatz X versetzt zur Werkzeugachse A ausgerichtet ist. Dieser beträgt beispielsweise zwischen 0,60 cm und 0,80 cm. Dabei hat das Trägerelement 10 eine rautenförmige Grundform mit zwei stumpfen 11, 12 und zwei spitzen Ecken 13, 14 und die Trägerachse TA schneidet diese zwei spitzen Ecken 13, 14. Hierdurch hat das Trägerelement 10 die Grundform einer Wendeschneidplatte. Dabei ist das Schneidelement 1 derart auf einer der spitzen Ecken 13 angeordnet, dass die Werkzeugschneide 2 über diese spitze Ecke 13 hinausragt und die Hinterkante in Richtung der anderen spitzen Ecke 14 weist. Die Befestigung des Schneidelements 1 am Trägerelement 10 ist form- und stoffschlüssig ausgebildet. Für den Formschluss ist eine Negativausnehmung für einen Teilausschnitt des Schneidelements 1 an der spitzen ecke 13 ausgebildet.

Mittels einer Schraube, die durch das in Fig. 1 gezeigte Befestigungsloch 15 im Zentrum des Trägerelements 10 in den von Fig. 2 gezeigten Drehmeißel 20 einschraubbar ist, wird das Trägerelement 10 form- und kraftschlüssig am Drehmeißel festgelegt. Für den Formschluss ist eine Negativausnehmung für einen Teilausschnitt des Trägerelements 10 am Drehmeißel 20 ausgebildet. Der Drehmeißel 20 besteht aus Werkzeugstahl.

In der Schemaskizze der Fig. 3 erkennt man eine Drehmaschine 30 mit dem Drehwerkzeug nach Fig. 1 sowie ein Werkstück 100, nämlich ein Linsenrohling, das auf einem Werkstückhalter 33 aufgeblockt ist. Der Werkstückhalter 33 ist mit einer nur angedeuteten Werkstückspindel 32 zur Aufnahme und Rotation des Werkstücks 100 um eine Rotationsachse RA angetrieben. Eine Linsenachse LA und die Rotationsachse RA sind vorliegend koaxial ausgerichtet.

Das Schneidelement 1 und die Werkstückspindel 32 sind mit einem nur angedeuteten Stellantrieb 31 relativ zueinander in zwei oder drei Maschinenachsrichtungen bewegbar angetrieben.

In Fig. 3 ist zudem dargestellt, wie ein lokaler Prismenwinkel PW zu bestimmen ist, Es handelt sich erkennbar um den Winkel der Stirnfläche zu einer imaginären Normalebene bezogen auf die Rotationsachse RA.

Mit der Drehmaschine 30 lässt sich ein Verfahren durchführen, gemäß dem die konkave Stirnseite des Werkstücks 100 durch Zerspanung hergestellt wird, indem das Werkstück 100 rotierend um die Rotationsachse RA angetrieben ist und das Drehwerkzeug 9 von außen nach innen, also auf die Rotationsachse RA zu, bewegt wird. Dabei sind die Rotationsachse RA und die Werkzeugachse A zur Bearbeitung der Stirnfläche 101 parallel zueinander ausgerichtet sind. Das Drehwerkzeug 9 ist so ausgerichtet, dass der Kreismittelpunkt M zwischen der Werkzeugachse A und der Rotationsachse RA liegt.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | |
|---|---|---|---|
| 1 | Schneidelement | A | Werkzeugachse |
| 2 | Werkzeug schneide | A1 | erster Abschnitt |
| 3 | Seitenfläche | A2 | zweiter Abschnitt |
| 4 | Seitenfläche | B | Breite |
| 5 | Hinterkante | D | Plättchendicke |
| | | FW | Freiwinkel |
| 9 | Drehwerkzeug | LA | Linsenachse |
| 10 | Trägerelement | M | Kreismittelpunkt |
| 11 | stumpfe Ecke | PW | Prismenwinkel |
| 12 | stumpfe Ecke | R | Werkzeugradius |
| 13 | spitze Ecke | RA | Rotationsachse |
| 14 | spitze Ecke | S1 | erste Seite |
| 15 | Befestigungsloch | S2 | zweite Seite |
| | | T | Tiefe |
| 20 | Drehmeißel | TA | Trägerachse |
| | | W | Öffnungswinkel |
| 30 | Drehmaschine | X | Seitenversatz |
| 31 | Stellantrieb | Y | Drehwerkzeugdicke |
| 32 | Werkstückspindel | | |
| 33 | Werkstückhalter | | |
| | | | |
| 100 | Werkstück | | |
| 101 | Stirnfläche | | |

## Patentansprüche

1. **Schneidelement** (1) für eine Drehmaschine (30) der Zerspantechnik, mit einer Werkzeugschneide (2), die
- aus einem ersten Material besteht,
- eine Werkzeugachse (A) des Schneidelements (1) in senkrechtem Winkel schneidet,
- einen Werkzeugradius (R) bezogen auf einen Kreismittelpunkt (M) aufweist, wobei der Kreismittelpunkt (M) auf der Werkzeugachse (A) liegt, und
- einen Öffnungswinkel (W) bezogen auf den Kreismittelpunkt (M) aufweist,
**dadurch gekennzeichnet, dass**
- der Werkzeugradius (R) zwischen 3,0 mm und 7,0 mm, vorzugsweise zwischen 4,0 mm und 6,0 mm, und besonders bevorzugt zwischen 4,5 mm und 5,5 mm beträgt,
- die Werkzeugschneide (2) einen Öffnungswinkel (W) bezogen auf den Kreismittelpunkt (M) aufweist, der maximal 90 Grad, bevorzugt maximal 70 Grad, weiter bevorzugt maximal 60 Grad, und besonders bevorzugt maximal 55 Grad beträgt, und
- das Schneidelement (1) eine Asymmetrie derart aufweist, dass die Werkzeugachse (A) den Öffnungswinkel (W) außermittig schneidet.

2. Schneidelement (1) gemäß Anspruch 1, **dadurch gekennzeichnet, dass** das erste Material
- ein synthetischer Diamantwerkstoff aus der Gruppe Polykristalliner Diamant (PKD), Chemical Vapor Deposition (CVD), synthetischer monokristalliner Diamant (MKD) und Aggregierte Diamant-Nanostäbchen (ADNR), oder
- polykristallines kubisches Bornitrid (CBN), oder
- ein Naturdiamant (ND) ist.

3. Schneidelement (1) gemäß einem der Ansprüche 1 oder 2, **dadurch gekennzeichnet, dass** die Asymmetrie derart ausgebildet ist, dass auf einer ersten Seite (S1) der Werkzeugachse (A) ein längerer Abschnitt (A1) der Werkzeugschneide (2) angeordnet ist als auf der gegenüberliegenden zweiten Seite (S2) der Werkzeugachse (A).

4. Schneidelement (1) gemäß einem der vorhergehenden Ansprüche, **dadurch gekennzeichnet, dass** die Asymmetrie derart ausgebildet ist, dass das Schneidelement (1) auf einer ersten Seite (S1) der Werkzeugachse (A) spitzer zuläuft als auf der gegenüberliegenden zweiten Seite (S2) der Werkzeugachse (A).

5. Schneidelement (1) gemäß einem der vorhergehenden Ansprüche, **dadurch gekennzeichnet, dass** sich an den Enden der Werkzeugschneide (2) jeweils eine Seitenfläche (3, 4) anschließt, die innerhalb des Werkzeugradius (R) angeordnet ist.

6. Schneidelement (1) gemäß einem der vorhergehenden Ansprüche, **dadurch gekennzeichnet, dass** dessen Breite (B) quer zur Werkzeugachse (A) größer ist als die Tiefe (T) entlang der Werkzeugachse (A).

7. Schneidelement (1) gemäß einem der vorhergehenden Ansprüche, **dadurch gekennzeichnet, dass** die Werkzeugschneide (2) positiv mit einem Freiwinkel (FW) größer 0° ausgebildet ist, wobei der Freiwinkel (FW) vorzugsweise zwischen 10° und 25°, weiter bevorzugt zwischen 14° und 21°, und besonders bevorzugt zwischen 17° und 19° beträgt.

8. **Drehwerkzeug** (9) mit einem Schneidelement (1) gemäß einem der vorhergehenden Ansprüche, das an einem Trägerelement (10) aus einem zweiten Material festgelegt ist, wobei das erste Material eine höhere Härte aufweist als das zweite Material, wobei das Trägerelement (10) eine Trägerachse (TA) aufweist, die parallel und/oder koaxial zur Werkzeugachse (A) ausgerichtet ist.

9. Drehwerkzeug (9) gemäß Anspruch 8, **dadurch gekennzeichnet, dass** das Trägerelement (10) eine rautenförmige Grundform mit zwei stumpfen (11, 12) und zwei spitzen Ecken (13, 14) aufweist, wobei das Schneidelement (1) an oder auf einer der spitzen Ecken (13) angeordnet ist.

10. Drehwerkzeug (9) gemäß einem der Ansprüche 8 oder 9, wobei die Trägerachse (TA) und die Werkzeugachse (A) parallel zueinander ausgerichtet sind, **dadurch gekennzeichnet, dass** ein Seitenversatz (X) zwischen Trägerachse (TA) und der Werkzeugachse (A) besteht, der zwischen 0,40 cm und 1,10 cm, bevorzugt zwischen 0,55 cm und 0,90 cm und besonders bevorzugt zwischen 0,60 cm und 0,80 cm beträgt.

11. **Drehmaschine** (30) mit einem Schneidelement (1) nach einem der Ansprüche 1 bis 7 oder einem Drehwerkzeug (9) nach einem der Ansprüche 8 bis 10, und mit einer Werkstückspindel (32) zur Aufnahme und Rotation eines Werkstücks (100) um eine Rotationsachse (RA), wobei die Rotationsachse (RA) und die Werkzeugachse (A) zur Bearbeitung einer Stirnfläche (101) des Werkstücks (100) exakt oder zumindest im Wesentlichen parallel zueinander ausgerichtet sind, und wobei das Schneidelement (1) und die Werkstückspindel (32) relativ zueinander in zwei oder drei Maschinenachsrichtungen bewegbar mit einem Stellantrieb (31) angetrieben sind.

12. **Verfahren** zum Betrieb einer Drehmaschine (30) mit einem ersten Drehwerkzeug (9) gemäß einem der Ansprüche 8 bis 10 und einem zweiten Drehwerkzeug, dessen Werkzeugradius kleiner ist als der Werkzeugradius (R) des ersten Drehwerkzeugs (9), wobei mittels einer Entscheidungslogik entschieden wird, ob die Bearbeitung einer vordefinierten Bearbeitungsfläche eines Werkstücks (100) mit dem ersten Drehwerkzeug (9) oder dem zweiten Drehwerkzeug durchgeführt wird, wobei die Entscheidungslogik
- eine maximal herzustellende Flächenkrümmung bestimmt und mit einem definierten Grenzwert abgleicht und/oder
- einen maximal herzustellenden Prismenwinkel (PW) bestimmt und mit einem definierten Grenzwert abgleicht,
wobei bei Übersteigen eines der Grenzwerte anstatt des ersten Drehwerkzeugs (9) das zweite Drehwerkzeug für die Bearbeitung eingesetzt wird.

13. **Verfahren** zum Betrieb einer Drehmaschine (30) mit einem Drehwerkzeug (9) gemäß einem der Ansprüche 8 bis 10, wobei am Werkstück (100) eine konkave Stirnseite durch Zerspanung hergestellt wird, indem das Werkstück (100) rotierend um eine Rotationsachse (RA) angetrieben ist und das Drehwerkzeug (9) von außen nach innen auf die Rotationsachse (RA) zu bewegt wird, wobei die Rotationsachse (RA) und die Werkzeugachse (A) zur Bearbeitung der Stirnfläche (101) exakt oder zumindest im Wesentlichen parallel zueinander ausgerichtet sind, **dadurch gekennzeichnet, dass** das Drehwerkzeug (9) so ausgerichtet ist, dass der Kreismittelpunkt (M) zwischen der Werkzeugachse (A) und der Rotationsachse (RA) liegt.

14. Verfahren nach Anspruch 13, **dadurch gekennzeichnet, dass** das Werkstück (100) prismatisch an einem Werkstückhalter gehalten ist, sodass eine Linsenachse (LA) des Werkstücks (100) einen Winkel größer als 0°, vorzugsweise zwischen 0,20° und 2,00°, weiter bevorzugt zwischen 0,50° und 1,80° und besonders bevorzugt zwischen 0,80° und 1,50° zur Rotationsachse (RA) aufweist.

15. **Verwendung** eines Schneidelements (1) gemäß einem der Ansprüche 1 bis 7 oder eines Drehwerkzeugs (9) gemäß einem der Ansprüche 8 bis 10 bei der Herstellung gekrümmter Oberflächen durch Zerspanung in einem Drehprozess.
